# EUROPÄISCHE PATENTSCHRIFT

(11) **EP 0 722 362 B1**
(45) Veröffentlichungstag und Bekanntmachung des Hinweises auf die Patenterteilung: **30.07.1997**
(21) Anmeldenummer: 94928812.0
(22) Anmeldetag: 24.09.1994
(51) Int. Cl.: B01J 20/32, G01N 30/48

(54) **VERFAHREN UND TRÄGER FÜR DIE GELPERMEATIONSCHROMOTOGRAPHIE**
PROCESS AND SUBSTRATES FOR GEL PERMEATION CHROMATOGRAPHY
PROCEDE ET SUPPORTS POUR CHROMATOGRAPHIE PAR PERMEATION DU GEL

(30) Priorität: 08.10.1993 DE 4334353
(43) Veröffentlichungstag der Anmeldung: 24.07.1996
(73) Patentinhaber: MERCK PATENT GmbH, 64293 Darmstadt (DE)
(72) Erfinder: MÜLLER, Egbert, D-64390 Erzhausen (DE)
(86) Internationale Anmeldenummer: EP9403197
(87) Internationale Veröffentlichungsnummer: WO9510355

(56) Entgegenhaltungen:
- EP-A- 0 006 199
- EP-A- 0 337 144
- EP-A- 0 425 848
- US-A- 4 029 583
- US-A- 4 332 694
- DATABASE WPI Week 8613, Derwent Publications Ltd., London, GB; AN 86-086136 & JP,A,61 034 463 (JAPAN EXLAN) 18. Februar 1986

## Beschreibung

Die Erfindung betrifft ein verbessertes Verfahren für die Gelpermeationschromatographie und Trägermaterialien für dieses Verfahren.

Die Gelpermeationschromatographie (GPC) zur Größentrennung von Makromolekülen ist zu einer Standardmethode für die Trennung von Biopolymeren, insbesondere von Proteinen geworden. Dazu werden Trägermaterialien benötigt, die eine hydrophile Oberfläche besitzen, und die möglichst kein unspezifisches Adsorptionsverhalten aufweisen. Weiterhin sollen die verwendeten Träger druckstabil sein, um hohe Durchflußraten zu erzielen. Insbesondere bei weitporigen Trägern ist diese Bedingung schwierig zu erfüllen.

Aus der Anmeldung DE 43 10 964 sind oxiranhaltige aktivierte Trägermaterialien bekannt, bei denen Monomere der Formel I auf einen hydroxylgruppenhaltigen Basisträger aufgepfropft sind, 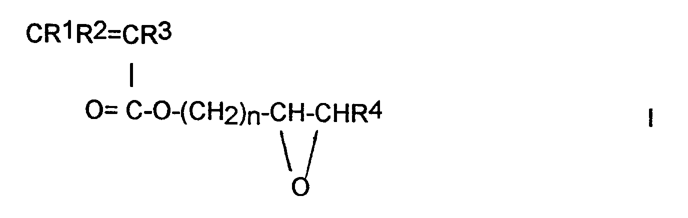 worin
- R¹, R² und R³: unabhängig voneinander H oder CH₃,
- R⁴: H oder C₁-C₅-Alkyl
und
- n: eine ganze Zahl zwischen 1 und 5
bedeuten. Es wurde gefunden, daß sich diese aktivierten Trägermaterialien zu den erfindungsgemäßen vernetzten Pfropfpolymerisaten umsetzen lassen. Dabei werden auf das bekannte Pfropfpolymerisat mit linearer Polymerkette beispielsweise durch Reaktion mit Bortrifluorid-Etherat vernetzt; die verbleibenden Epoxidgruppen werden gegebenenfalls anschließend hydrolysiert.

Es wurde gefunden, daß sich die Trenneigenschaften von Fractogel® TSK HW 65 (S), einem porösen Mischpolymerisat auf Vinylbasis, das aliphatische Hydroxylgruppen enthält (1 mÄq OH/g), erheblich veränderten, wenn man dieses Basismaterial einer Pfropfpolymerisation mit Glycidylmethacrylat und einer anschließenden Vernetzung unterwarf. Durch diese Maßnahmen werden Gelpermeationsträger mit verbesserten Trenneigenschaften zugänglich.

Die Erfindung betrifft Trägermaterialien für die Gelpermeationschromatographie auf der Grundlage von hydroxylgruppenhaltigen Basisträgern, auf deren Oberflächen Polymere kovalent gebunden sind, dadurch gekennzeichnet, daß
a) der Basisträger aliphatische Hydroxylgruppen enthält,
b) die kovalent gebundenen Polymeren über eine endständige Monomereinheit an den Träger gebunden sind.
c) die linearen Polymeren Monomereinheiten der Formel II enthalten,
d) die Polymeren durch Etherbrücken vernetzt sind, 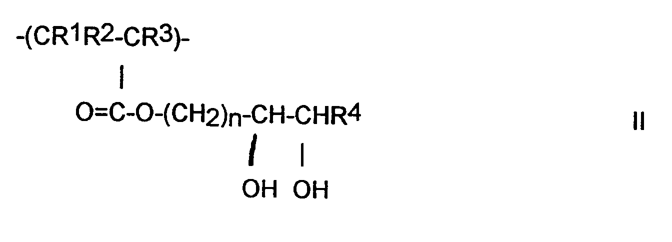 worin
   - R¹, R² und R³: unabhängig voneinander H oder CH₃,
   - R⁴: H oder C₁-C₅-Alkyl
   und
   - n: eine ganze Zahl zwischen 1 und 5
   bedeuten.

Die Erfindung betrifft Verfahren zur Herstellung von Trägermaterialien auf Grundlage von hydroxylgruppenhaltigen Basisträgern, auf deren Oberflächen Polymere durch Pfropfpolymerisation kovalent gebunden werden, dadurch gekennzeichnet, daß die hydroxylgruppenhaltigen Basisträgerteilchen in Gegenwart von Cer(IV)-Ionen in einer Lösung enthaltend Monomere der Formel I 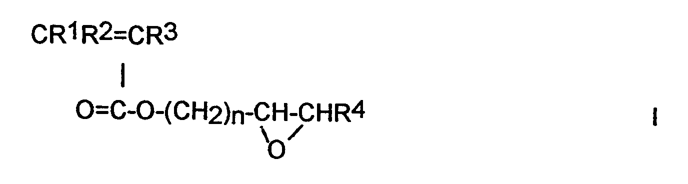 worin
- R¹, R² und R³: unabhängig voneinander H oder CH₃
- R⁴: H oder C₁-C₅-Alkyl
und
- n: eine ganze Zahl zwischen 1 und 5
bedeuten,
suspendiert und polymerisiert werden, und anschließend Etherbrücken hergestellt werden und schließlich die restlichen Epoxidgruppen zu Hydroxylgruppen umgewandelt werden.

Die Erfindung betrifft die Verwendung eines erfindungsgemäßen Trägermaterials für die Gelpermeationschromatographie, sowie Verfahren zur Trennung mindestens zweier Substanzen in einem Gemisch mittels Gelpermeationschromatographie unter Verwendung eines erfindungsgemäßen Trägermaterials.

Basisträger im Sinne der vorliegenden Erfindung sind Partikel, auf die Polymere aufgepfropft werden. Als Basisträger können allgemein übliche poröse oder unporöse Trägerteilchen eingesetzt werden, soweit sie primäre oder sekundäre aliphatische Hydroxylgruppen an ihrer Oberfläche aufweisen, oder in die nach an sich bekannten Verfahren aliphatische Hydroxylgruppen eingeführt werden können. Geeignet als Basisträger sind insbesondere Polymere auf Polyvinylalkohol-Basis oder Copolymere aus (Meth)acrylatderivaten und Comonomeren mit aliphatischen Hydroxylgruppen oder diolmodifizierte Kieselgele oder Mischpolymerisate auf Polyvinylbasis, die aliphatische Hydroxylgruppen enthalten. Derartige Basisträger sind kommerziell erhältlich; z.B. Fractogel® TSK HW 65 (S) (Fa. E. Merck), ein poröses Mischpolymerisat auf Vinylbasis, das aliphatische Hydroxylgruppen enthält (1 mÄq OH/g).

Überraschenderweise wurde gefunden, daß (Meth)acrylsäureester, die eine Oxirangruppe enthalten, auf Basisträger, die aliphatische Hydroxylgruppen auf ihrer Oberfläche enthalten, aufgepfropft werden können. Dabei wird erfindungsgemäß die Polymerisation mit Cer(IV)-Ionen gestartet: G. Mino und S. Kaizerman (1958) J.Polymer Science 31, 242-243; G. Mino et al. (1959) J.Polymer Science 38, 393-401. Die nach dieser Methode erhältlichen aktivierten Trägermaterialien lassen sich erfindungsgemäß weiter zu den vernetzten Trennmaterialien für die Gelpermeationschromatographie umsetzen.

Die Pfropfpolymerisation nach Mino und Kaizerman wird nach bekannten Verfahren in rein wäßriger, salpetersaurer Lösung ausgeführt. Deswegen kann diese Reaktion nur mit gut wasserlöslichen Monomeren ausgeführt werden. Es zeigte sich jedoch überraschenderweise, daß die Umsetzung mit Cer(IV)-salzen auch möglich ist, wenn als Lösungsmittel eine Mischung aus Wasser und organischen Lösungsmitteln, die keine Hydroxylgruppen enthalten, benutzt wird. Besonders bevorzugt sind dabei Dioxan oder Tetrahydrofuran. Der Anteil des organischen Lösungsmittels im Reaktionsansatz beträgt bevorzugt 10-80 Volumen-%, besonders bevorzugt 20-50 Volumen-%.

Im Gegensatz zu makroporigen Materialien auf der Grundlage von bekannten vernetzten Dextran- oder Agarosegelen, sind die erfindungsgemäßen Gele druckstabil und erlauben hohe Durchflußraten.

Auch ohne weitere Ausführungen wird davon ausgegangen, daß ein Fachmann die obige Beschreibung in weitesten Umfang nutzen kann. Die bevorzugten Ausführungsformen sind deswegen lediglich als beschreibende, keineswegs als in irgendeine Weise limitierende Offenbarung aufzufassen.

Die vollständige Offenbarung aller vor- und nachstehend aufgeführten Anmeldungen, Patente und Veröffentlichungen, sowie der korrespondierenden Anmeldung DE 43 34 353, eingereicht am 08.10.1993, sind durch Bezugnahme in diese Anmeldung eingeführt.

Die folgenden Beispiele sollen die Erfindung näher erläutern, sie stellen keinen Einschränkung der Erfindung dar.

### Beispiele

In den folgenden Herstellungsbeispielen bedeutet Raumtemperatur (RT) 15-30°C. Die Polymeriation wird in einem Dreihalskolben geeigneter Größe, der mit Rührer, Tropftrichter und Thermometer ausgerüstet ist, ausgeführt. Gewaschen wird durch Absaugen auf einer Nutsche.

### Beispiel 1: Herstellung eines oxiran-aktivierten Trägers ausgehend von Fractogel®-TSK HW 65 (S)

Zu einer Suspension aus 100 ml sedimentiertem Fractogel®-TSK HW 65 (S) und 50 ml Wasser werden mit 4 g Ammoniumcer(IV)nitrat (gelöst in 50 ml 2 M HNO₃) bei Raumtemperatur unter starkem Rühren vermischt. Nach 1 Minute erfolgt die Zugabe einer Lösung von 6 g (2,3-Epoxypropyl)-methacrylat in 60 ml Dioxan. Es wird 3 Stunden weitergerührt. Anschließend wird die Reaktionssuspension erst mit destilliertem Wasser und dann mit 0.05 M EDTA-Lösung gewaschen.

### Beispiel 2: Vernetzung der Poly-(2,3-epoxypropyl)-methacrylat-Ketten

Das modifizierte Gel aus Beispiel 1 wird durch Waschen mit je 200 ml wäßrigem Dioxan 25,50 und 75 Vol.-% entwässert und abschließend mit 200 ml reinem Dioxan gewaschen. Für die folgende Reaktion wird das Gel in 100 ml getrocknetem Dioxan suspendiert und die Suspension in einen Dreihalskolben überführt. Unter Luftabschluß wurden 25 ml Bortrifluorid-Etherat unter Rühren zugegeben und noch eine Stunde bei Raumtemperatur gerührt. Anschließend wurde das Gel abfitriert und mit je 200 ml Dioxan, Aceton und Wasser gewaschen.

Die nicht umgesetzten Oxirangruppen werden schließlich durch Behandlung mit 200 ml 0,5 M Schwefelsäure (2 Stunden, 45 °C) hydrolysiert. Anschließend wird das Material mit Phosphatpuffer (0,1 M; pH 7) neutral gewaschen und abschließend mit Wasser gewaschen.

Das folgende Anwendungsbeispiel zeigt die Wirkung der erfindungsgemäß modifizierten Trennmaterialien.

### Beispiel 3: Vergleich des modifizierten Trennmaterials mit dem unmodifizierten Ausgangsprodukt

Je ein Chromatographierohr aus Glas (Länge 30 cm, innerer Durchmesser 10 mm; SuperFormance®, Fa. E. Merck) werden mit unmodifiziertem Trennmaterial Fractogel®-TSK HW 65 (S) und mit nach Beispiel 2 modifiziertem Trennmaterial gefüllt. Verschiedene Kalibratorproteine und Dextranblau werden in 0,15 M NaCl in 20 mM Phosphatpuffer pH 7 gelöst und auf beiden Säulen bei einem Fluß von 1 ml/min eluiert. Es werden folgende Elutionsdaten gefunden:

| Analyt | Molgewicht | Elution nach Minuten | |
|---|---|---|---|
| | | modifiziert | unmodifiziert |
| Dextranblau | 2.000.000 | 15,9 | 8,5 |
| Thyreoglobin | 660.000 | 14,9 | 8,55 |
| Rinderserumalbumin | 67.000 | 16,0 | 16,6 |
| Myoglobin | 12.000 | 16,3 | 17,0 |

Es zeigt sich, daß das Elutionsverhalten für Analyte mit hohem Molekulargewicht (Dextranblau und Thyreoglobin) deutlich verändert wird, während dies bei Proteinen mit mittlerem oder niedrigem Molekulargewicht (Rinderserumalbumin und Myoglobin) nicht der Fall ist.

## Patentansprüche

1. Trägermaterial für die Gelpermeationschromatographie auf der Grundlage von hydroxylgruppenhaltigen Basisträgern, auf deren Oberflächen Polymere kovalent gebunden sind, dadurch gekennzeichnet, daß
a) der Basisträger aliphatische Hydroxylgruppen enthält,
b) die kovalent gebundenen Polymeren über eine endständige Monomereinheit an den Träger gebunden sind,
c) die linearen Polymeren Monomereinheiten der Formel II enthalten,
d) die Polymeren durch Etherbrücken vernetzt sind, 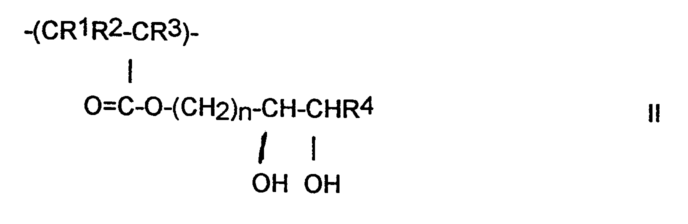 worin
R¹, R² und R³ unabhängig voneinander H oder CH₃,
R⁴ H oder C₁-C₅-Alkyl
und
n eine ganze Zahl zwischen 1 und 5
bedeuten.

2. Verfahren zur Herstellung von Trägermaterialien auf Grundlage von hydroxylgruppenhaltigen Basisträgern, auf deren Oberflächen Polymere durch Pfropfpolymerisation kovalent gebunden werden, dadurch gekennzeichnet, daß die hydroxylgruppenhaltigen Basisträgerteilchen in Gegenwart von Cer(IV)-Ionen in einer Lösungenthaltend Monomere der Formel I 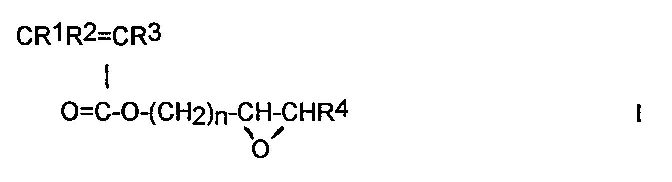 worin
R¹, R² und R³ unabhängig voneinander H oder CH₃
R⁴ H oder C₁-C₅-Alkyl
und
n eine ganze Zahl zwischen 1 und 5
bedeuten,
suspendiert und polymerisiert werden, und anschließend Etherbrücken hergestellt werden und schließlich die restlichen Epoxidgruppen zu Hydroxylgruppen umgewandelt werden.

3. Verwendung eines Trägermaterials mit den Merkmalen nach Anspruch 1 für die Gelpermeationschromatographie.

4. Verfahren zur Trennung mindestens zweier Substanzen in einem Gemisch mittels Gelpermeationschromatographie unter Verwendung eines Trägermaterials nach Anspruch 1.

## Claims

1. Support material for gel permeation chromatography, based on hydroxyl-containing base supports on whose surfaces polymers are covalently bonded, characterized in that
a) the base support comprises aliphatic hydroxyl groups,
b) the covalently bonded polymers are bonded to the support via a terminal monomer unit,
c) the linear polymers comprise monomer units of formula II,
d) the polymers are crosslinked by ether bridges 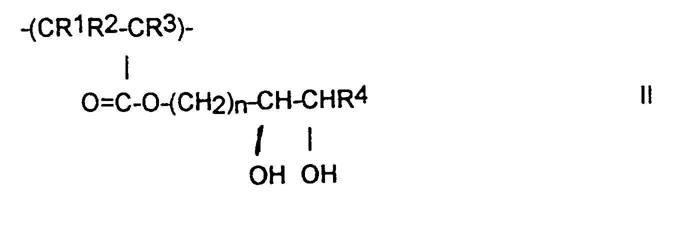 in which
R¹, R² and R³ independently of one another are H or CH₃,
R⁴ is H or C₁-C₅-alkyl
and
n is an integer between 1 and 5.

2. Process for the preparation of support materials based on hydroxyl-containing base supports on whose surfaces polymers are covalently bonded by graft polymerization, characterized in that the hydroxyl-containing base support particles are suspended and polymerized in the presence of cerium(IV) ions in a solution comprising monomers of the formula I 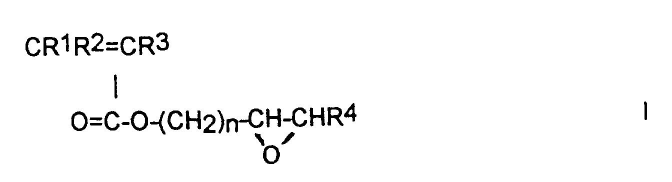 in which
R¹, R² and R³ independently of one another are H or CH₃,
R⁴ is H or C₁-C₅-alkyl
and
n is an integer between 1 and 5,
ether bridges are subsequently produced, and finally the remaining epoxide groups are converted to hydroxyl groups.

3. Use of a support material having the features according to Claim 1 for gel permeation chromatography.

4. Method of separating at least two substances in a mixture by means of gel permeation chromatography using a support material according to Claim 1.

## Revendications

1. Support pour chromatographie de perméation des gels reposant sur des supports de base contenant des groupes hydroxyles, à la surface desquels sont liés de façon covalente des polymères, caractérisé en ce que
a) le support de base contient des groupes hydroxyles aliphatiques,
b) les polymères liés de façon covalente sont liés au support par l'intermédiaire d'une unité monomère en position finale,
c) les polymères linéaires contiennent des unités monomères de formule II,
d) les polymères sont réticulés par des ponts éther, 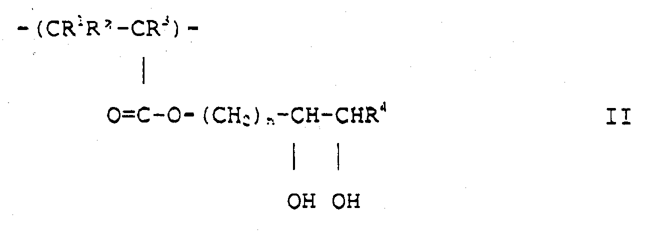 où
R¹, R² et R³ représentent indépendamment l'un de l'autre H ou CH₃ ,
R⁴ représente H ou un alkyle en C₁ à C₅
et
n représente un nombre entier compris entre 1 et 5.

2. Procédé de préparation de supports reposant sur des supports de base contenant des groupes hydroxyle, à la surface desquels sont liés de façon covalente des polymères par une polymérisation par greffage, caractérisé en ce qu'on met en suspension et en ce qu'on polymérise les particules de support de base contenant des groupes hydroxyles en présence d'ions cérium(IV) dans une solution contenant des monomères de formule I 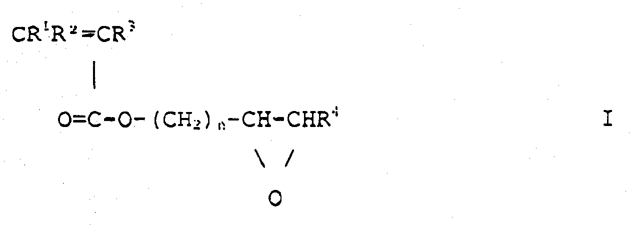 dans laquelle
R¹, R² et R³ représentent indépendamment l'un de l'autre H ou CH₃
R⁴ représente H ou un alkyle en C₁ à C₅
et
n représente un nombre entier compris entre 1 et 5,
puis en ce qu'on prépare des ponts éther et enfin en ce qu'on transforme le reste des groupes époxydes en groupes hydroxyles.

3. Application d'un support présentant les caractéristiques selon la revendication 1 à la chromatographie de perméation des gels.

4. Procédé de séparation d'au moins deux substances dans un mélange au moyen d'une chromatographie de perméation des gels avec utilisation d'un support selon la revendication 1.
